# EUROPEAN PATENT SPECIFICATION

(11) **EP 3 651 622 B1**
(45) Date of publication and mention of the grant of the patent: **02.12.2026**
(21) Application number: 18766355.4
(22) Date of filing: 13.07.2018
(51) Int. Cl.: A47J 31/36, B65D 85/804

(54) **ASSEMBLY OF A CAPSULE AND A BREW CHAMBER, BREW CHAMBER, BEVERAGE PREPARATION MACHINE, CAPSULE AND USE OF A CAPSULE**
ANORDNUNG EINER KAPSEL UND EINER BRÜHKAMMER, BRÜHKAMMER, GETRÄNKEZUBEREITUNGSMASCHINE, KAPSEL UND VERWENDUNG EINER KAPSEL
ENSEMBLE COMPOSÉ D'UNE CAPSULE ET D'UNE CHAMBRE D'INFUSION, CHAMBRE D'INFUSION, MACHINE DE PRÉPARATION DE BOISSON, CAPSULE ET UTILISATION D'UNE CAPSULE

(30) Priority: 14.07.2017 NL 2019253
(43) Date of publication of application: 20.05.2020
(73) Proprietor: Koninklijke Douwe Egberts B.V., 3532 AD Utrecht (NL)
(72) Inventor: KAMERBEEK, Ralf, 3532 AD Utrecht (NL); GROOTHORNTE, Arend Hendrik, 3532 AD Utrecht (NL); DIJKSTRA, Hielke, 3532 AD Utrecht (NL); VAN GAASBEEK, Erik Pieter, 3532 AD Utrecht (NL)
(74) Representative: V.O.
(86) International application number: PCT/NL2018/050486
(87) International publication number: WO 2019/013641

(56) References cited:
- WO-A1-2014/076041
- CA-A1- 2 719 126
- DE-U1- 202013 005 950

## Description

### Field of the invention

The present invention is directed at an assembly of a capsule and a brew chamber according to the preamble of claim 1. The invention is further directed at a capsule for use in an assembly as referred to above. Furthermore, the invention is directed at a use of a capsule as referred to above in an assembly.

### Background

An assembly according to the preamble of claim 1 is known from WO2014/076041A1.

Capsule based beverage preparation machines require the loading of a capsule into the machine for brewing beverages. Such machines are very popular due to their ability to allow the preparation of constant quality brews in domestic, semi-professional and professional environments. To a private user, this allows him or her to serve top quality beverages at home to guests or for own use, without the necessity to go out and visit a coffee bar or café. Moreover, the available capsules provide a large variety of different types and tastes of beverages of constant level non-varying quality.

In a capsule based beverage preparation machine, beverage preparation essentially takes place within the assembly formed by the brew chamber and the correspondingly shaped capsule that is to be loaded therein. Therefore, the capsule is usually loaded into a brew chamber first. Next, the brew chamber may be closed and sealed, and the capsule is pierced. Thereafter, a fluid (typically water) is injected into the capsule. The capsule is filled with a beverage ingredient, which upon mixing with the fluid creates the desired beverage. Typically, the capsule cooperates with parts of the brew chamber, e.g. a suitably shaped extraction plate, to create an outflow opening as a result of the increasing pressure in the capsule. This allows the prepared beverage to flow out, after which it is collected and led towards a receptacle, e.g. a cup.

Proper sealing of the brew chamber during brewing is an important aspect of the brewing process to ensure that the beverage is prepared at the expected level of quality associated with that particular capsule type. If the sealing of the brew chamber is insufficient, the injected fluid or semi-prepared beverage may leak out of the brew chamber without being collected in the receptacle or before proper mixing with the ingredient has occurred. As will be understood, if the level of sealing differs per each use, so will the quality of the prepared beverage be different for each use, which is not desired.

For a number of capsule based beverage preparation machines, to obtain a proper sealing of the brew chamber, it is important that the capsule is well aligned with the brew chamber. In such machines, the sealing of the brew chamber may be optimal if the capsule is neatly centered in relation to the notional central axis of the brew chamber. The above is in particular the case with capsules that comprise a flange which is clasped between a first and second brew chamber part when the brew chamber is closed, e.g. between a brew chamber cavity and a correspondingly formed extraction plate that closes the brew chamber. In such cases, incorrect alignment of a longitudinal axis through the capsule with a central axis of the brew chamber (i.e. when the capsule is not or not well centered in the brew chamber) may cause excessive leakage of the brew chamber during preparation of the beverage.

Some of these machines comprise dedicated elements in the walls of the brew chamber, such as ridges or protrusions, that contribute to the centering of the capsule during closing of the brew chamber. However, such dedicated elements are not available in all capsule based brewing machines. In absence thereof, the capsule must be centered in a different manner to ensure the desired proper sealing of the chamber.

### Summary of the invention

It is an object of the present invention to overcome the abovementioned difficulties and to provide an assembly of a capsule and a brew chamber for use in a beverage preparation machine, wherein a self-centering of the capsule within the brew chamber upon closing of the brew chamber is achieved, even in absence of dedicated centering elements in the walls of a brew chamber.

To this end, in accordance with a first aspect, there is provided herewith an assembly of a capsule and a brew chamber, wherein the brew chamber is configured for use in a beverage preparation machine, wherein the brew chamber comprises a first brew chamber part and a second brew chamber part arranged for cooperating with each other for, upon closing of the first brew chamber part with the second brew chamber part, forming the brew chamber, the first brew chamber part having a cavity for holding the capsule, and further including a plurality of knives located in the cavity concentrically arranged around a central axis of the brew chamber for piercing the capsule upon closing of the first brew chamber part with the second brew chamber part; wherein the capsule comprises a capsule body and lid closing an open end of the capsule body, the capsule body being frusto conically shaped, wherein the capsule body comprises a bottom opposite the open end, a side wall extending from the bottom, and a flange extending outwardly from the side wall near the open end, wherein the lid is attached to the flange and is configured to be opened under fluid pressure for forming the outlet side of the capsule, and wherein the capsule is hermetically closed, wherein the bottom of the capsule is configured to be pierced by the knives of the first brew chamber part for forming the inlet side of the capsule, and wherein the capsule body and the lid are made from aluminum; wherein the flange of the capsule is wider than the bottom, and wherein the flange is configured to be held between the first and the second brew chamber part, the flange being formed such as to provide a seal, wherein the seal cooperates with a rim of the first brew chamber part for sealing the brew chamber upon closing thereof; and wherein the bottom of the capsule comprises a slanted wall portion which is circumferentially arranged around a longitudinal axis of the capsule, wherein the slanted wall portion is oriented under an angle with the longitudinal axis, for centering the capsule relative to the central axis of the brew chamber prior to piercing of the capsule due to slipping of the at least one of the knives upon engaging of the at least one knife on the slanted wall portion.

In accordance with the present invention, the slanted wall portion being oriented under an angle with the longitudinal axis. This results in a relatively low static friction coefficient of the slanted wall portion which will cause each of the knives to slip upon engagement on the slanted wall portion in case, upon engagement of such a knife, the capsule is not yet fixated leaving some degree of freedom in movement of the capsule relative to the respective knife. Thus, slipping occurs when at least one, but not all knives engage on the surface of the slanted wall portion. This will force the capsule in a centered orientation with respect to the central axis of the brew chamber.

The slanted wall portion is oriented under an angle with the longitudinal axis through the capsule. The slanted wall portion cooperates, in use, with the circumferentially arranged knives in the cavity of the first brew chamber part. When the knives of the first brew chamber part engage with the slanted wall portion, slipping of the knives on the surface of the slanted wall portion occurs in case the capsule is not well centered to the brew chamber. In other words, if the longitudinal axis through the capsule is not or not sufficiently aligned with the central axis through the brew chamber, the one or more knives that will first touch the surface of the slanted wall portion will slip on the surface. As a result, the capsule will slightly move (rotate) such that the longitudinal axis through the capsule will become aligned with the central axis through the brew chamber. Hence, the capsule will self-center within the brew chamber, upon closing of the brew chamber.

When all the circumferentially arranged knives in the cavity of the brew chamber are in contact with the slanted wall portion, the slipping of the knives on the surface of the slanted wall portion will seize, and the position of the capsule with respect to the brew chamber will be fixed. During the closing of the first brew chamber part by the second brew chamber part, this will cause the knives to penetrate the wall of the capsule body, to thereby create an inlet to the capsule body interior.

As may be appreciated, slipping of a knife on the surface of the slanted wall portion will occur when the force exerted by the knife on the surface comprises a component parallel to the surface that exceeds a static frictional threshold force of the knife on the surface, while at the same time a force component that is perpendicular to the surface of the slanted wall portion does not exceed a threshold force that is necessary to penetrate the wall. Before the flange of the capsule is clasped in between the first brewing chamber part and the second brewing chamber part, the capsule is not yet fixated within the cavity of the first brew chamber part. Therefore, when the first knife touches the surface of the slanted wall portion, the capsule has sufficient degrees of freedom to slightly move and be repositioned in the cavity. As a result, the static frictionally threshold force is relatively small, causing the knife to easily slip on the surface such as to allow self-centering of the capsule with respect to the concentrically arranged knives.

In accordance with some embodiments, the bottom of the capsule comprises a ledge, wherein the ledge is concentrically arranged around the slanted wall portion and contiguous therewith, for providing a piercing ledge for piercing the capsule after centering thereof. The ledge, which is concentrically arranged around the slanted wall portion and contiguous therewith, provides a resting area for the knives in case slipping occurs on the slanted wall portion. Therefore, piercing of the capsule bottom will occur on the ledge. Therefore, to obtain optimal centering, the edge between the slanted wall portion and the ledge, i.e. where the slanted wall portion turns to the ledge, is concentrically located just inner to the intended piercing locations associated with optimal centering. Typically, the knives are also concentrically arranged at a fixed radius at various locations around the central axis through the brew chamber. In that case, preferably the edge on the capsule will have a radius that corresponds therewith, such that piercing takes place when the longitudinal axis of the capsule is optimally aligned with the central axis through the brew chamber. As may be appreciated, this may be released somewhat dependent on any allowable tolerance in terms centering.

In accordance with a further embodiment, the bottom of the capsule comprises a further wall portion concentrically arranged around the slanted wall portion or the ledge, the further wall portion being oriented under a further angle with the longitudinal axis. The combination of, from the center of the capsule to the edge between the bottom and the side wall of the capsule, a slanted wall portion, a ledge and a further wall portion that is also angled, provides for some additional structural integrity that reduced any bending of the bottom wall under the pressure of the knives during piercing.

Preferably, even, the orientation of the further wall portion is such that an inner edge of the slanted wall portion (closest to the longitudinal axis) is located in line with the tangent of the further wall portion. With the ledge in between the slanted wall portion and the further wall portion, the angle of slanted wall portion with respect to the longitudinal axis will then be smaller than the angle between the further wall portion and the longitudinal axis. This further decreases the friction coefficient of the slanted wall portion, thereby improving it's centering ability.

The angle of the slanted wall portion with respect to the longitudinal axis must be small enough for the slipping to occur. At small angles, the knives which are typically oriented parallel to the central axis of the cavity, touch the surface at corresponding small angles. The abovementioned requirement for slipping are more easily met. In the assembly of the present invention, the flange of the capsule is correspondingly shaped or formed such as to form a seal that cooperates with a rim on the first brew chamber part. In particular for these type of capsules, proper centering of the capsule with respect to the rim of the first brew chamber part is important for obtaining a proper seal of the brew chamber. Therefore, the advantages of the present invention with these type of capsules are evident. An incorrect centering of the capsule would easily result in an insufficient seal of the brew chamber, and leaking of the brew chamber during the preparation of the beverage.

In accordance with some embodiments, the angle of the slanted wall portion of the capsule with respect to the longitudinal axis is smaller than 60 degrees, preferably smaller than 55 degrees. Good results for example have been obtained with slanted wall portions having an angle with respect to the longitudinal axis of approximately 49 degrees. However, the angle of the slanted wall portion with respect to the longitudinal axis may be different, for example 42 degrees, 47 degrees, 48 degrees, 50 degrees, 51 degrees, or 55 degrees. In fact, the angle at which slipping occurs may further dependent on factors such as: the stiffness of the capsule top, the velocity of the piercing knives, the shape of the top, the material type or thickness - for example determining how difficult or easy the capsule material has the tendency to dent. The optimal angle of the slanted wall portion may depend also on these factors. The forces exerted by the knife on the surface resolve into force components parallel to the surface that exceed force components transverse to the surface. Hence slipping easily occurs, causing self-centering of the capsule.

In some embodiments, upon closing of the first brew chamber part with the second brew chamber part, the seal is clasped between the first and second brew chamber part against the rim of the first brew chamber part for providing the sealing of the brew chamber. In these embodiments, the seal is formed of a folded wall portion of the flange, and the rim is correspondingly shaped with the folded wall portion for enabling the sealing of the brew chamber.

In particular where the seal is formed of a folded wall portion of the flange, incorrect centering of the capsule with respect to the brew chamber may cause the flange to become damaged when the flange is clasped in between the first brew chamber part and the second brew chamber part. Because fluid is to be dispensed in the brew chamber during beverage preparation under relatively high pressure (8 to 19 bars), a first brew chamber part and a second brew chamber part are pressed tightly to each other to prevent leaking. Under these pressures, a seal that is formed on a folded wall portion may easily become damaged if the capsule is not well centered. Therefore, the self centering effect of the assembly in accordance with a present invention is particularly advantageous with capsules wherein the seal is formed of a folded wall portion, as is proposed in respect of the present embodiments. Moreover, it is observed that the forming of a seal on the flange of a folded wall portion provides additional advantages during manufacturing of the capsule. This is because the proper folding of a flange is a relatively straight forward manner of creating structures and edges of the flange that may serve as a seal, and prevents the necessity to provide additional elements such as sealing range or other wall portions that may complicate the manufacturing process. In particular in accordance with the present invention, where the capsules are completely made of aluminum, such folding is straight forwardly achieved during manufacturing.

In some of these embodiments, the rim includes a groove and wherein the flange is folded such as to form an edge that falls into the groove upon closing of the first brew chamber part with the second brew chamber part after said centering of the capsule.

Some beverage preparation machines include a brew chamber having a first brew chamber part which includes a rim wherein the rim already includes a groove that allows cooperation with the correspondingly shaped seal in the form of an edge that falls into the groove upon closing of the first brew chamber part with a second brew chamber part. The present invention, wherein the capsules comprise the additional slanted wall portion defined above, is particular advantageous in combination with such machines.

In accordance with some embodiments, the angle of the slanted wall portion with respect to the longitudinal axis is dependent on one or more material properties of the capsule, wherein the material properties include at least one of: a material hardness of the capsule body, a surface roughness of the slanted wall portion, and a wall thickness of the capsule body.

As explained above, slipping of the knives on the surface of the slanted wall portion is achieved due to correct angling of the slanted wall portion with respect to the longitudinal axis. In addition, as such slipping is based on overcoming the frictional forces between the capsule and the knives prior to the knife penetrating the material of the wall, additional measures may be taken to improve the self-centering effect. For example, to increase the probability of slipping of the knives, the surface of the slanted wall portion may be smoothened. For example, the surface may be polished or otherwise processed, or may be covered with a coating that makes the surface very smooth. In addition to this, in order to increase the threshold force that is required to be overcome in order to penetrate the wall, a material hardness of the capsule body may be increased. This may be achieved in various manners, for example by preprocessing of the aluminum from which the capsules are made, or (as already suggested above) by coating of the wall of the capsule (or at least the slanted wall portion) such as to increase the hardness of the surface. Also, the thickness of the capsule body may be a parameter to tune in this respect.

Furthermore, in accordance with some embodiments, the brew chamber further comprises a fluid dispensing device for supplying an amount of fluid, such as water, under pressure to the first brew chamber part, for providing the fluid to the capsule through the inlet side for providing the fluid pressure for opening the lid.

In accordance with a second aspect, there is provided a capsule for the preparation of a beverage from a beverage preparation machine according to claim 13.

In accordance with a third aspect, the invention relates to the use of a capsule according to the second aspect in an assembly according to the first aspect described above.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figures 1a and 1b respectively illustrate a side view and a top view of a capsule for use in an assembly in accordance with an embodiment;
Figures 2a-c schematically illustrate interaction between a brew chamber and a self-centering capsule in an assembly in accordance with an embodiment;
Figure 3 illustrates a cross-section of a flange of a capsule for use in an assembly in accordance with an embodiment;
Figure 4 illustrates a capsule in accordance with an embodiment of the invention;
Figures 5A to 5C illustrate various cross-sections of different sealing arrangements;
Figure 6 illustrates a cross-section of a sealing arrangement.

### Detailed description

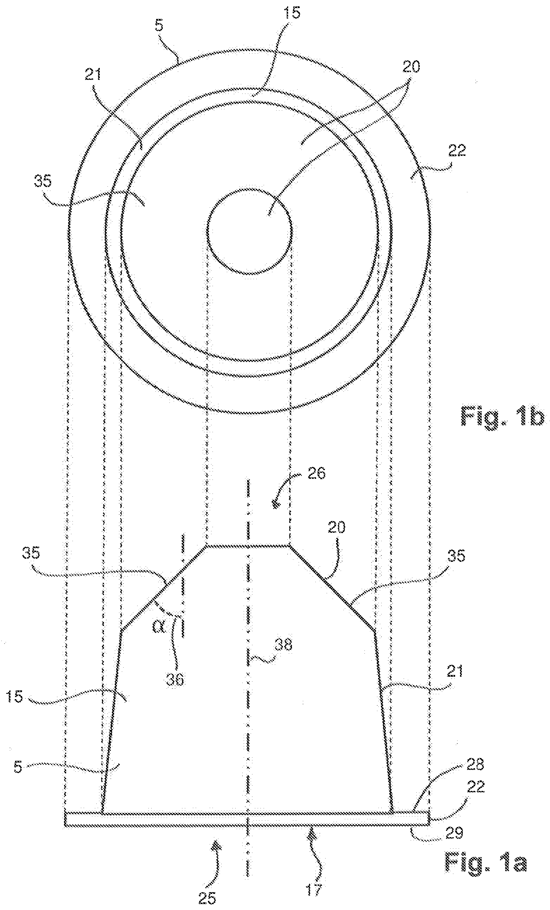

Figures 1A and 1B schematically illustrate a capsule 5 for use in an assembly 1 in accordance with an embodiment of the present invention. Figure 1B illustrates a top view of the capsule 5 while figure 1A illustrates a side view of the capsule. The figures 1A and 1B are schematic, and various details of the capsule have been omitted in order to prevent obscuring a description of the invention. The capsule 5 comprises a capsule body 15. The capsule 5 is illustrated in figure 1A face down. The capsule body 15 on the upper side thereof is closed with a lid 17 attached to the flange 22 of the capsule 5. The lid 17 may be formed of a aluminum foil or sheet, and reference numeral 17 indicates the location of the lid on the capsule. The capsule body 15 further comprises side walls 21. The capsule 5 is symmetrically shaped around a longitudinal axis 38. Therefore, the side wall 21 is a slanted cylindrical side wall symmetric around longitudinal axis 38. The capsule 5 is frusto conically shaped. The bottom 20 of the capsule body thereby has an explicit conical shape as illustrated in figure 1A. The conical shape of the bottom 20 is provided by a slanted wall portion 35, which is cylindrically symmetric around longitudinal axis 38. The slanted wall portion 35 is oriented under an angle α 36 with the longitudinal axis 38.

In use, the capsule will be inserted into the brew chamber 3. In many cases, the brew chamber will be arranged in a more or less horizontal orientation, such that gravity may act on the capsule in a direction more or less transverse to the central axis 13 of the brew chamber 3. The bottom 20 of the capsule will be pierced by the knives of a brew chamber 3 after which the bottom 20 forms the inlet side 26 of the capsule. In the brew chamber 3, fluid, such as hot water, will be dispensed into the interior of the capsule body 15. The interior of capsule body 15 is filled with a beverage ingredient, such as coffee grind or a different beverage ingredient, which mixes with the fluid dispensed therein. Typically, the pressure at which the fluid is dispensed into the capsule is 8 to 19 bars and may be dependent on the type of beverage to be prepared. By dispensing the fluid into the capsule 5, the pressure inside the capsule body 15 increases until the fluid pressure inside the capsule 15 is large enough the tear open the lid 17 (e.g. against an extraction plate forming a second brew chamber part 8). The upper side of the capsule 5 thereby forms the outlet side 25 of the capsule, through which the prepared beverage may escape towards an outlet of the beverage preparation machine.

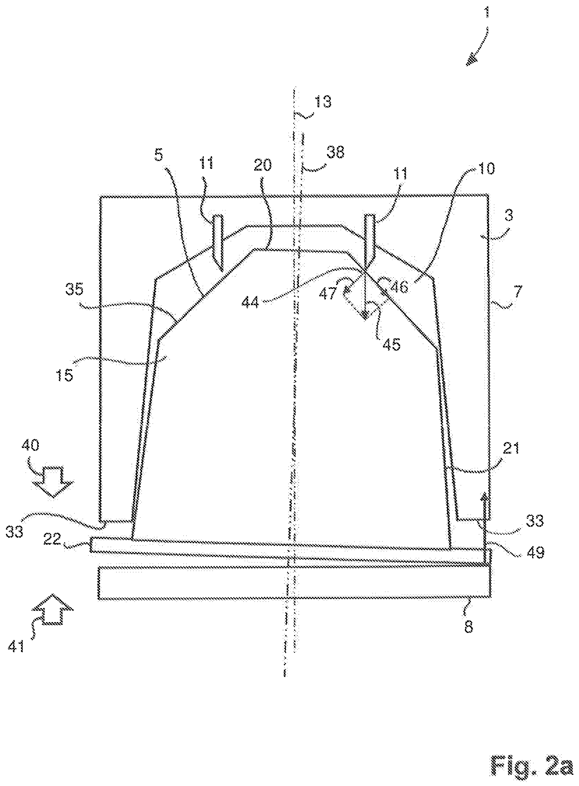

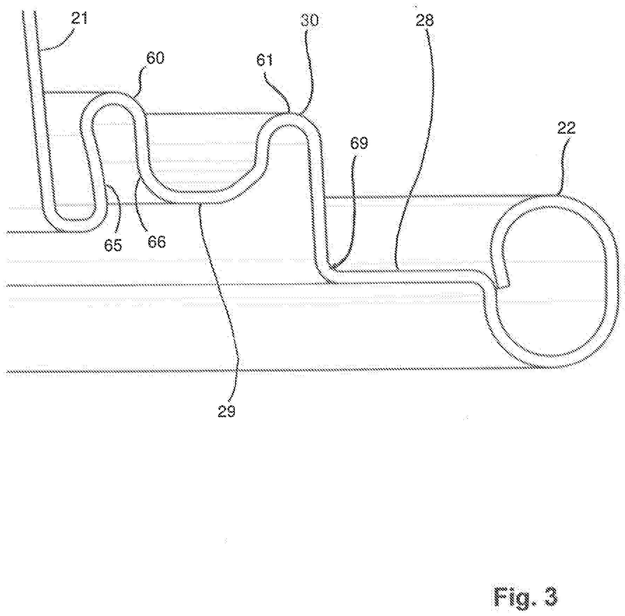

The flange 22 comprises an upper side 29 and a lower side 28. As will be explained further below, the flange 22 is formed such as to provide a seal 30 (see figure 3) for sealing the brew chamber in use. Typically, the seal 30 is located on the lower side 28 of the flange 22 for cooperating with a rim of the first brew chamber part 7 (see figures 2A-2C).

The angle α of the slanted wall portion 35 is such as to enable some slipping of the knives of the brew chamber upon engaging with the slanted wall portion, in particular in a situation wherein the longitudinal axis 38 of the capsule and central axis 13 through brew chamber are not well aligned. The angle of the slanted wall portion of the capsule with respect to the longitudinal axis is smaller than 60 degrees, preferably smaller than 55 degrees. At the given angles, an obtainable static friction coefficient of the slanted wall portion upon engaging of the knives may be within a range of 0.25 to 0.40, preferably between 0.30 and 0.35, such as 0.32.

The principle of centering is schematically illustrated in figures 2A through 2C. In these figures, an assembly in accordance with an embodiment of the present invention is schematically illustrated. Again, various details of both the brew chamber 3 and the capsule 5 of the assembly 1 of the present invention have been omitted in order to not obscure the description therewith. The illustrations in figures 2A through 2C are purely schematic such as to explain the principle of the present invention. In the assembly 1, the brew chamber 3 consists of a first brew chamber part 7 and a second brew chamber part 8. The second brew chamber part 8 typically provides the extraction plate and cooperates with a first brew chamber part 7 which comprises the cavity 10 for holding the capsule 5. In the situation in figure 2A, the capsule 5 is already for a large part located in the cavity 10 provided by the first brew chamber part 7. However, the capsule 5 is not well centered with the cavity 10, and likewise with the concentrically arranged knives 11 in the cavity 10. This is illustrated by the central axis 13 of the brew chamber 3 and the longitudinal axis 38 through the capsule 5. As can be seen in figure 2A, the central axis 13 and the longitudinal axis 38 are not aligned. This causes one of the knives 11 to already engage with the slanted wall portion 35 of the capsule 5 at point 44. Because during closing of the brew chamber 3, the second brew chamber part 8 and the first brew chamber part 7 move towards each other as is indicated by the arrows 40 and 41, the second brew chamber part 8 engages with the flange 22 on the right side of figure 2A while there is no contact between the flange 22 and the second brew chamber part on the left side of figure 2A. In the situation illustrated in figure 2A, the motion of the first brew chamber part 7 and the second brew chamber part 8 relative to each other causes the knife 11 in point 44 to exert a force 45 on the slanted wall portion 35 of the capsule 5. At the same time, a second brew chamber part 8 on the right side of the figure exerts a contact force 49 illustrated in figure 2A. The force 45 of the knife 11 on the slanted wall portion 35 in location 44, resolves into a component 46 parallel to the slanted wall portion 35 and a component 47 perpendicular to the slanted wall portion 35. The component 46 parallel to the slanted wall portion is large enough to allow some slipping of the knife 11 on the surface of the slanted wall portion. In view of the torque created between forces 45 and 49, this causes a slight rotation of the capsule 5 to thereby align the longitudinal axis 38 with the central axis 13: a centering action of the capsule 5.

As may be appreciated, the angle α 36 of the slanted wall portion 35 is an important factor in determining whether knives 11 in point 44 will slip across the surface (enabling the self centering effect) or whether piercing of the slanted wall portion 35 will occur more readily than slipping. If no slipping occurs, and the knife 11 will pierce through the capsule wall first, the capsule 5 will become stuck and the sealing of the capsule in the brew chamber 3 may be insufficient. For example, without the self centering effect of the capsule, the flange 22 may become damaged or a slit or insufficient sealing is left open on one side of the capsule. In that case, fluid may leak out of the brew chamber 3 during preparation of the beverage. This in particular occurs where the flange 22 cooperates with the rim 33 of the first brew chamber part 7 to obtain a proper sealing. Note that details of the flange 22 and how it cooperates with the rim 33 will be described further below with reference to figures 3.

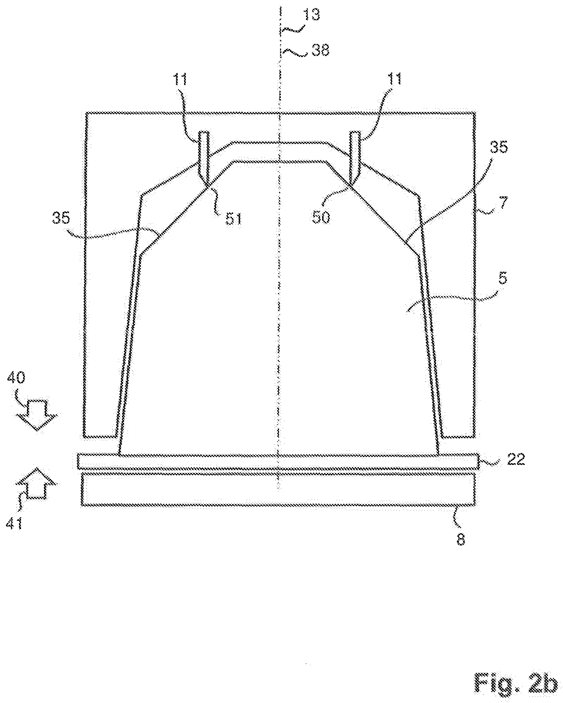

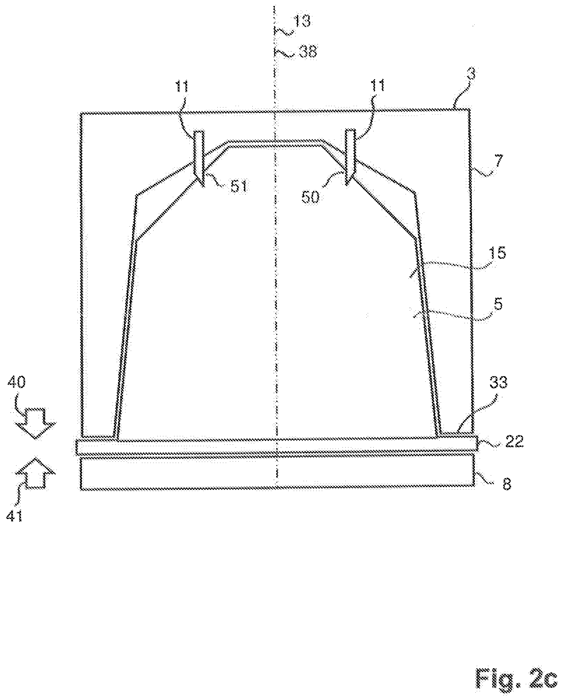

The self centering effect of the capsule 5 in the brew chamber 3 will continue until the central axis 13 and the longitudinal axis 38 of the brew chamber and the capsule respectively are well aligned. This situation is illustrated in figure 2C. As a result, prior to piercing all knives 11 of the brew chamber 3 will engage with the slanted wall portion 35 of the capsule 5. In figure 2B, this is illustrated by the knives 11 engaging with the capsule 5 in locations 50 and 51 on the slanted wall portion 35. Upon further moving of the second brew chamber part 8 towards the first brew chamber part 7 of the brew chamber 3, as indicated by arrows 40 and 41, the capsule 5 will be pierced by the knives 11. This situation is illustrated in figure 2C. The schematic illustration of figure 2C shows that the capsule 5 is pierced by the knives 11 in locations 50 and 51, whereas the flange 22 cooperates well with the rim 33 of the first brew chamber part while being clasped in between the first brew chamber part 7 and the second brew chamber part 8. The clasping of the flange 22 between the first brew chamber part and the second brew chamber part 8 in combination with the exerted pressure indicated by arrows 40 and 41, provides for the sealing of the brew chamber as will be explained with reference to figures 3 below.

Figure 3 shows a cross section of the flange 22 in close up thereof. On the left side of figure 3, a part of the side wall 21 of the capsule 5 is visible. The flange 22 is folded during manufacturing of the capsule 5 such that in cross section a seal 30 is formed thereon. The seal 30 is an M-shaped seal that cooperates with grooves and edges present on the rim 33 of the first brew chamber part 7. In figure 3, the upper side 29 and the lower side 28 of the flange 22 are illustrated. The seal 30 consists of an outer ring 61 that will form the contact surface of the seal. An inner ring 60 will serve as an elastic element during engaging of the rim 33 with the flange 22. The inner ring 60 consists of a first wall 65 and a second wall 66 that may flex towards and away from each other via the bending curve of the inner ring 60. Bent 69 of the flange 22 forms a virtual hinge.

The consolidated description below explains how the M-seal 30 on flange 22 works. The rim 33 of the first brew chamber part 7, includes a groove between two edges. Sealing is obtained by cooperation between the groove on the rim 33 of the first brew chamber part 7 and the outer ring 61. The inner ring 60, with first wall 65 and second wall 66, thereby acts as elastic element, enabling outer ring 61 to adapt its shape to the groove in the first brew chamber part 7 to provide a sufficient hydraulic seal 30 for acceptable brewing performance.

Hereinabove, a particular embodiment of a seal has been described. It will be understood that the present invention is not limited by the details of the described seal. A seal may be embodied differently than as specifically described herein. For example, generally, the seal may extend in a radial direction from a longitudinal axis through the capsule. The seal may comprise a base. The base may extend in the radial or substantially radial direction and may comprise raised and/or lowered portions that are configured to cooperate with the rim of a brew chamber. Such raised or lowered portions may be formed by the folded aluminum wall, e.g. for example as described above or differently formed. Alternatively or additionally, sealing elements or additional sealing structures may be present on the flange or seal. For example, elements that increase a force that is exerted between the rim and the seal may be present, such as elastic or flexible parts.

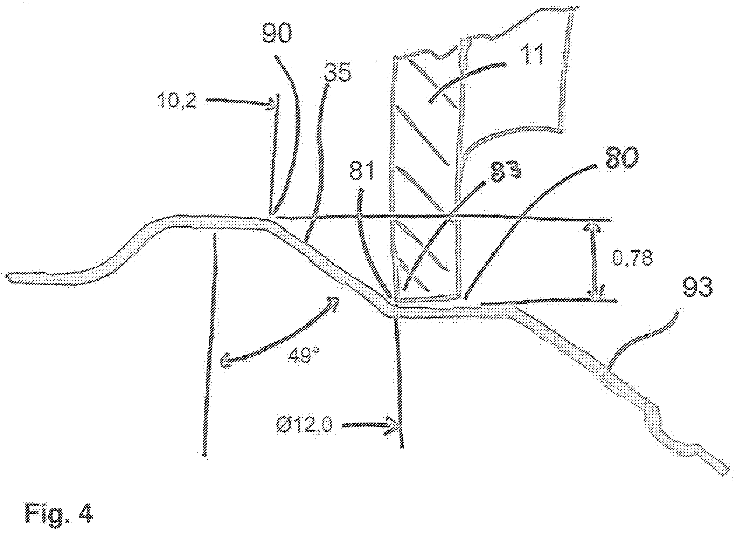

Another embodiment of the present invention is illustrated in figure 4. Here the capsule 5 comprises a circumferential ledge 80, serving as piercing area, arranged in a ring around the slanted wall portion 35. At least some of the knives will engage with the slanted wall portion 35 if the capsule is not well centered. Upon centering of the capsule 5, the knives engage on the ledge 80 around the slanted wall portion, and penetrate the capsule 5. Preferably, the ledge 80 is directly contiguous to the slanted wall portion 35 in a circumferential arrangement. Preferably, a diameter of the inner edge 81 of the ledge 80 corresponds with the mutual relative locations of the knives such that, as illustrated in figure 4, the inner edges 83 of the knives 11 abut against the inner edge 81 of the ledge 80. This ensures an optimal centering of the capsule 5 before piercing occurs.

In the capsule 5 of figure 4, circumferentially around the ledge 80, the capsule bottom comprises a further wall portion 93. The further wall portion is also oriented under an angle with the longitudinal axis 38 through the capsule 5. This provides for an increased volume of the capsule 5. Moreover, the overall shape of the bottom including the slanted wall portion 35, the ledge 80 and the further wall portion 93, due to the curves and bends, provides for an increased structural integrity as a result of it's shape. This minimizes bending of the bottom under pressure of the piercing knives 11 upon engaging thereof. Preferably, even, the orientation of further wall portion 93 is such that inner edge 90 of the slanted wall portion 35 (closest to longitudinal axis 38) is located in line with the tangent of wall portion 93. With the ledge 80 in between the slanted wall portion 35 and the further wall portion 93, the angle of slanted wall portion 35 with respect to the longitudinal axis 38 (here 49 degrees) can be smaller than the angle between the further wall portion 93 and the longitudinal axis 38, for further decreasing the friction coefficient of the slanted wall portion 35 for improving it's centering ability.

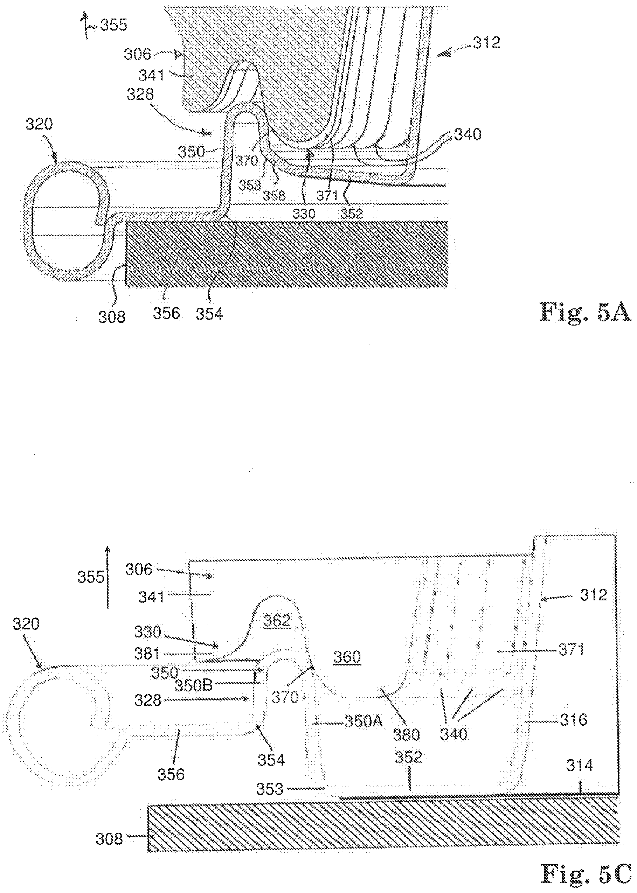

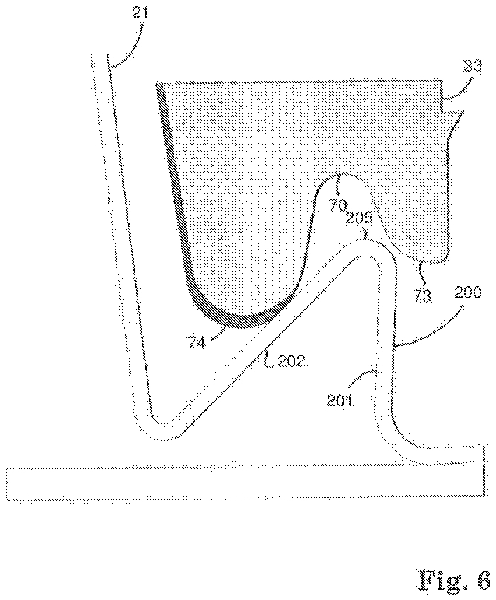

Preferably a capsule with the arrangement of figure 4, comprises a flange 22 includes an M-type seal 30, similar to the seal illustrated in figure 3. Instead of the M-type seal 30, illustrated in figure 3, the sealing arrangement located on the flange 22 may be of a different type. For example, a different seal is illustrated in figures 5A to 5C and figure 6. Any of the sealing arrangements illustrated in the figures 3, 5A to 5C, and figure 6, may be applied in combination with the various capsule designs falling under the scope of the claims, e.g. as discussed herein such as the embodiments of any of figures 1, or 2A to 2C.

Fig. 5A shows an embodiment of a sealing member 328 forming an additional bearing at the outwardly extending flange 320 of a capsule body 312. The sealing member 328 and the remainder of the capsule body 312 are made of the same plate material. The sealing member 328 has a projection 350, projecting axially from inner and outer foot portions 353, 354 in an axial direction 355 towards the bottom of the capsule body 312. A trough having a bottom 352 is located inwardly adjacent to the projection 350. The bottom 352 of the trough is positioned at axially distance from the outer foot 354 of the projection 350 in the direction 355 of the bottom of the capsule body 312 and also from a portion 356 of the outwardly extending flange 320 between the sealing member 328 and the curled edge and is substantially flat.

The first brew chamber part 306, comprises an annular element 341 with an inner ridge 360 and a free contact end 330. Further, the projection 350 and the bottom 352 of the trough are arranged such that the free contact end 330 of the annular element 341 is contacted by the bottom 352 of the trough if the capsule is positioned in the first brew chamber part 306 of the beverage preparation device and the first brew chamber part is closed by the second brew chamber part 308.

The distance between the projection 350 and a side wall 316 of the capsule body 312 is preferably 0.9-1.25 mm, which allows the inner ridge 360 of the first brew chamber part 306 of widely used and commercially available beverage preparation devices (such as the Citiz, Lattisima, U, Maestria, Pixie, Inissia and Essenza) to be reliably squeezed against the projection 350 with the side wall 316 in close proximity thereto, but slightly spaced from the side wall 316.

The projection 350 has a projection top constituting a portion of the projection, for instance a half, a third or a quarter of the projection that is axially most distal from the feet 353, 354 of the projection 350. The projection 350 is configured such that its projection top exerts a radial force on the free contact end 330 of the annular element 341 if the capsule is positioned in the first brew chamber part 306 of the beverage preparation device and the first brew chamber part is closed by means of a second brew chamber part 308 of the beverage preparation device.

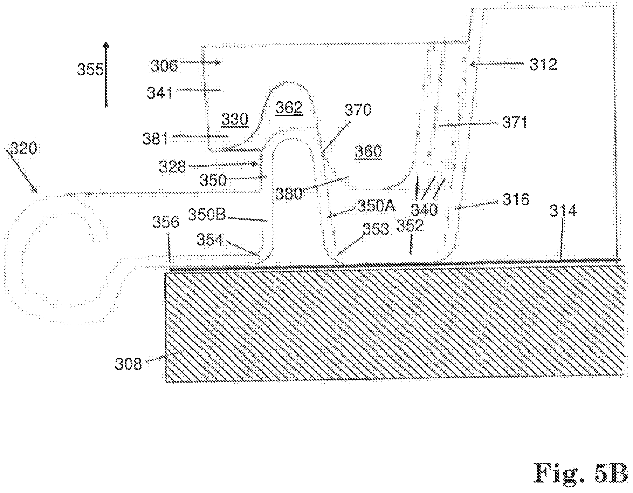

Figure 5B shows a further embodiment of a sealing member 328 forming an additional bearing at the outwardly extending flange 320 of the capsule body 312. The sealing member 328 and the remainder of the capsule body 312 are made of the same plate material. The sealing member 328 has a single projection 350, projecting axially from inner and outer foot portions 353, 354 in an axial direction 355 towards the bottom of the capsule body 312. A trough having a flat inner flange portion 352 is located inwardly adjacent to the projection 350. The flat inner flange portion 352 of the trough is positioned at the same height as the outer foot 354 of the projection 350 and also at the same height as the flat outer flange portion 356 of the outwardly extending flange 320 between the sealing member 328 and the curled outer edge 343.

Further, the projection 350 and the flat inner flange portion 352 of the trough are arranged such that the free contact end 360 of the annular element 341 is contacted by the flat inner flange portion 352 of the trough if the capsule is positioned in the first brew chamber part of the beverage preparation device and the first brew chamber part is closed by the second brew chamber part 308.

The distance between the projection 350 and a side wall 316 of the capsule body 312 is preferably 0.9-1.25 mm, which allows the inner ridge or free contact end 360 of the first brew chamber part 306 of widely used and commercially available beverage preparation devices (such as the Citiz, Lattisima, U, Maestria, Pixie, Inissia and Essenza) to be reliably squeezed against the projection 350 with the side wall 316 in close proximity thereto, but slightly spaced from the side wall 316.

The projection 350 has a projection top constituting a portion of the projection, for instance a half, a third or a quarter of the projection that is axially most distal from the feet 353, 354 of the projection 350. The projection 350 is configured such that its projection top exerts a radial force on the free contact end 330 of the annular element 341 if the capsule is positioned in the first brew chamber part 306 of the beverage preparation device and the first brew chamber part is closed by means of the second brew chamber part 308 of the beverage preparation device.

In a further sealing arrangement shown in Fig. 5C a sealing member 328 forms an additional bearing at the outwardly extending flange 320 of the capsule body 312. The sealing member 328 and the remainder of the capsule body 312 are made of the same plate material. The sealing member 328 has a single projection 350, projecting axially from inner and outer foot portions 353, 354 in an axial direction 355 towards the bottom of the capsule body 312. A trough having a flat inner flange portion 352 is located inwardly adjacent to the projection 350. The flat inner flange portion 352 of the trough is positioned at an axial distance from the outer foot 354 of the projection 350 in a direction away from the bottom of the capsule body 312 and also at an axial distance away from a flat outer flange portion 356 of the outwardly extending flange 320 between the sealing member 328 and the curled outer edge 343.

Further, the projection 350 and the flat inner flange portion 352 of the trough are arranged such that the free contact end 360 of the annular element 341 is contacted by the flat inner flange portion 352 of the trough if the capsule is positioned in the first brew chamber part of the beverage preparation device and the first brew chamber part is closed by the second brew chamber part 308.

The distance between the projection 350 and a side wall 316 of the capsule body 312 is preferably 0.9-1.25 mm, which allows the inner ridge or free contact end 360 of the first brew chamber part 306 of widely used and commercially available beverage preparation devices (such as the Citiz, Lattisima, U, Maestria, Pixie, Inissia and Essenza) to be reliably squeezed against the projection 350 with the side wall 316 in close proximity thereto, but slightly spaced from the side wall 316.

The projection 350 has a projection top constituting a portion of the projection, for instance a half, a third or a quarter of the projection that is axially most distal from the feet 353, 354 of the projection 350. The projection 350 is configured such that its projection top exerts a radial force on the free contact end 330 of the annular element 341 if the capsule is positioned in the first brew chamber part 306 of the beverage preparation device and the first brew chamber part is closed by means of the second brew chamber part 308 of the beverage preparation device.

Figure 6 shows a further alternative seal 200 having a V-shaped arrangement of walls 201 and 202. With seal 200, upon closing of the brew chamber, the wall 202 bends, causing the apex 205 to form a tight seal in the groove 70 when the rim 33 closes the brew chamber.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the scope of the invention, as is determined by the claims. The invention may be practiced otherwise then as specifically described herein, and is only limited by the appended claims.

## Claims

1. Assembly (1) of a capsule (5) and a brew chamber (3), wherein the brew chamber (3) is configured for use in a beverage preparation machine, wherein the brew chamber (3) comprises a first brew chamber part (7, 306) and a second brew chamber part (8, 308) arranged for cooperating with each other for, upon closing of the first brew chamber part (7, 306) with the second brew chamber part (8, 308), forming the brew chamber (3),
the first brew chamber part (7, 306) having a cavity (10) for holding the capsule (5), and further including a plurality of knives (11) located in the cavity (10) concentrically arranged around a central axis (13) of the brew chamber (3) for piercing the capsule (5) upon closing of the first brew chamber part (7, 306) with the second brew chamber part (8, 308);
wherein the capsule (5) comprises a capsule body (15, 312) and lid (17) closing an open end of the capsule body (15, 312), the capsule body (15, 312) being frusto conically shaped, wherein the capsule body (15, 312) comprises a bottom (20) opposite the open end, a side wall (21, 316) extending from the bottom (20), and a flange (22, 320) extending outwardly from the side wall (21, 316) near the open end, wherein the lid (17) is attached to the flange (22, 320) and is configured to be opened under fluid pressure for forming the outlet side (25) of the capsule (5), and wherein optionally the capsule (5) is hermetically closed, wherein the bottom (20) of the capsule (5) is configured to be pierced by the knives (11) of the first brew chamber part (7, 306) for forming the inlet side of the capsule (5), and wherein the capsule body (15, 312) and the lid (17) are made from aluminum;
wherein the flange (22, 320) of the capsule (5) is wider than the bottom (20), and wherein the flange (22, 320) is configured to be held between the first and the second brew chamber part (8, 308), the flange (22, 320) being formed such as to provide a seal (30, 200), wherein the seal (30, 200) cooperates with a rim (33) of the first brew chamber part (7, 306) for sealing the brew chamber (3) upon closing thereof; and
wherein the bottom (20) of the capsule (5) comprises a slanted wall portion (35) which is circumferentially arranged around a longitudinal axis (38) of the capsule (5), wherein the slanted wall portion (35) is configured for cooperating with the knives (11) such that the knives (11) engage with the slanted wall portion (35) upon closing of the brew chamber (3), **characterized in that** the slanted wall portion (35) is oriented under an angle (α, 36) with the longitudinal axis (38) for centering the capsule (5) relative to the central axis (13) of the brew chamber (3) prior to piercing of the capsule (5) due to slipping of the at least one of the knives (11) upon engaging of the at least one knife (11) on the slanted wall portion (35).

2. Assembly (1) according to claim 1, wherein the bottom (20) of the capsule (5) comprises a ledge (80), wherein the ledge (80) is concentrically arranged around the slanted wall portion (35) and contiguous therewith, for providing a piercing ledge (80) for piercing the capsule (5) after centering thereof.

3. Assembly (1) according to claim 1 or 2, wherein the bottom (20) of the capsule (5) comprises a further wall portion (93) concentrically arranged around the slanted wall portion (35) or the ledge (80), the further wall portion (93) being oriented under a further angle with the longitudinal axis (38).

4. Assembly (1) according to any of the preceding claims, wherein the angle (α, 36) of the slanted wall portion (35) of the capsule (5) with respect to the longitudinal axis (38) is smaller than 60 degrees, preferably smaller than 55 degrees.

5. Assembly (1) according to any of the claims 1-4, wherein upon closing of the first brew chamber part (7, 306) with the second brew chamber part (8, 308), the seal (30, 200) is clasped between the first and second brew chamber part (8, 308) against the rim (33) of the first brew chamber part (7, 306) for providing the sealing of the brew chamber (3), and wherein the seal (30, 200) is formed of a folded wall portion of the flange (22, 320).

6. Assembly (1) according to claim 5, wherein at least one of:
the rim (33) is correspondingly shaped with the folded wall portion for enabling the sealing of the brew chamber (3); or
the rim (33) comprises a ridge to be clasped against the seal (30, 200).

7. Assembly (1) according to claim 5 or 6, wherein the rim (33) includes a groove (70) and wherein the flange (22, 320) is folded such as to form an protrusion or outer ring (61) that falls into the groove (70) upon closing of the first brew chamber part (7, 306) with the second brew chamber part (8, 308) after said centering of the capsule (5).

8. Assembly (1) according to any one or more of the preceding claims, wherein the angle (α, 36) of the slanted wall portion (35) with respect to the longitudinal axis (38) is dependent on one or more material properties of the capsule (5), wherein the material properties include at least one of: a material hardness of the capsule body (15, 312), a surface roughness of the slanted wall portion (35), and a wall thickness of the capsule body (15, 312).

9. Assembly (1) according to any one or more of the preceding claims, wherein, in combination with the angle (α, 36) of the slanted wall portion (35), a maximum static friction coefficient within a range of 0.25 to 0.40, preferably between 0.30 and 0.35, is obtained by at least one of:
a material hardness of at least a part of the capsule body (15, 312);
a surface roughness of the slanted wall portion (35);
a coating on the slanted wall portion (35) or on at least a part of the capsule body (15, 312); and
a wall thickness of the capsule body (15, 312).

10. Assembly (1) according to any of the preceding claims, wherein the brew chamber (3) further comprises a fluid dispensing device for supplying an amount of fluid, such as water, under pressure to the first brew chamber part (7, 306), for providing the fluid to the capsule (5) through the inlet side (26) for providing the fluid pressure for opening the lid.

11. Assembly (1) according to any of the preceding claims, wherein the capsule (5) further comprises a piercing area (80) arranged circumferentially around the slanted wall portion (35), the piercing area (80) having a surface oriented substantially transverse to the longitudinal axis (38).

12. Assembly (1) according to claim 11, wherein an inner edge (81) of the piercing area (80) is at a distance of approximately 11 to 13 millimeter from the longitudinal axis (38).

13. Capsule (5) for the preparation of a beverage from a beverage preparation machine, the capsule (5) being configured for use in an assembly (1) according to any one or more of the claims 1-12, the capsule (5) further configured for being inserted into a brew chamber (3) of the beverage preparation machine, wherein the brew chamber (3) is closable by closing of a first brew chamber part (7, 306) with a second brew chamber part (8, 308) cooperating therewith, the first brew chamber part (7, 306) having a cavity (10) for holding the capsule (5), and further including a plurality of knives (11) located in the cavity (10) concentrically arranged around a central axis (13) of the brew chamber (3),
wherein the capsule (5) comprises a capsule body (15, 312) and lid (17) closing an open end of the capsule body (15, 312), the capsule body (15, 312) being frusto conically shaped, wherein the capsule body (15, 312) comprises a bottom (20) opposite the open end, a side wall (21, 316) extending from the bottom (20), and a flange (22, 320) extending outwardly from the side wall (21, 316) near the open end, wherein the lid (17) is attached to the flange (22, 320) and is configured to be opened under fluid pressure for forming the outlet side (25) of the capsule (5), and wherein optionally the capsule (5) is hermetically closed, wherein the bottom (20) of the capsule (5) is configured to be pierced by the knives (11) of the brew chamber (3) for forming the inlet side (26) of the capsule (5), and wherein the capsule body (15, 312) and the lid (17) are made from aluminum;
wherein the flange (22, 320) of the capsule (5) is wider than the bottom (20), and wherein the flange (22, 320) is configured to be held between the first brew chamber part (7, 306) and a second brew chamber part (8, 308) of the brew chamber (3), the flange (22, 320) being formed such as to provide a seal (30, 200), wherein the seal (30, 200) is configured for cooperating with a rim (33) of the first brew chamber part (7, 306) for sealing the brew chamber (3) upon closing thereof; and
wherein the bottom (20) of the capsule (5) comprises a slanted wall portion (35) which is circumferentially arranged around a longitudinal axis (38) of the capsule (5), wherein the slanted wall portion (35) is configured for cooperating with the knives (11) such that the knives (11) engage with the slanted wall portion (35) upon closing of the brew chamber (3), **characterized in that** the slanted wall portion (35) is oriented under an angle (α, 36) with the longitudinal axis (38), for centering the capsule (5) relative to the central axis (13) of the brew chamber (3) prior to piercing of the capsule (5) due to slipping of the at least one of the knives (11) upon engaging of the at least one knife (11) on the slanted wall portion (35), wherein in combination with the angling of the slanted wall portion (35), a maximum static friction coefficient within a range of 0.25 to 0.40, preferably between 0.30 and 0.35, is obtained by at least one of:
a material hardness of at least a part of the capsule body (15, 312);
a surface roughness of the slanted wall portion (35);
a coating on the slanted wall portion (35) or on at least a part of the capsule body (15, 312); and
a wall thickness of the capsule body (15, 312).

14. Capsule (5) according to claim 13, wherein the bottom (20) of the capsule (5) comprises a ledge (80), wherein the ledge (80) is concentrically arranged around the slanted wall portion (35) and contiguous therewith, for providing a piercing ledge (80) for piercing the capsule (5) after centering thereof.

15. Capsule (5) according to claim 13 or 14, wherein the bottom (20) of the capsule (5) comprises a further wall portion (93) concentrically arranged around the slanted wall portion (35) or the ledge (80), the further wall portion (93) being oriented under a further angle with the longitudinal axis (38).

16. Capsule (5) according to claim 15, wherein the angle (α, 36) of the slanted wall portion (35) of the capsule (5) with respect to the longitudinal axis (38) is smaller than 60 degrees, preferably smaller than 55 degrees.

17. Capsule (5) according to any of the claims 13-16, wherein the seal (30, 200) is configured for being clasped against the rim (33) of the first brew chamber part (7, 306) for providing the sealing of the brew chamber (3), and wherein the seal (30, 200) is formed of a folded wall portion of the flange (22, 320).

18. Capsule (5) according to claim 17, wherein the rim (33) comprises at least one of an edge or a groove (70) arranged for cooperating with the seal (30, 200) such as to exert sealing force, and the folded wall portion is correspondingly shaped with the at least one edge or groove (70) of the rim (33) for enabling the sealing of the brew chamber (3).

19. Capsule (5) according to claim 14 or 15, wherein the rim (33) includes a groove (70) and wherein the flange (22, 320) is folded such as to form an outer ring (61) or protrusion that falls into a groove (70) located on the rim (33) upon closing of the first brew chamber part (7, 306) with the second brew chamber part (8, 308) after said centering of the capsule (5).

20. Capsule (5) according to any one or more of the claims 13-19, wherein the angle (α, 36) of the slanted wall portion (35) with respect to the longitudinal axis (38) is dependent on one or more material properties of the capsule (5), wherein the material properties include at least one of: a material hardness of the capsule body (15, 312), a surface roughness of the slanted wall portion (35), and a wall thickness of the capsule body (15, 312).

21. Capsule (5) according to any of the claims 13-20, further comprising a piercing area (80) arranged circumferentially around the slanted wall portion (35), the piercing area (80) having a surface oriented substantially transverse to the longitudinal axis (38).

22. Capsule (5) according to claim 21, wherein an inner edge (81) of the piercing area (80) is at a distance of approximately 11 to 13 millimeter from the longitudinal axis (38).

23. Use of a capsule (5) according to any one or more of the claims 13-22 in an assembly (1) according to any of the claims 1-12, wherein the brew chamber (3) comprises a first brew chamber part (7, 306) and a second brew chamber part (8, 308) arranged for cooperating with each other for forming the brew chamber (3),
the first brew chamber part (7, 306) having a cavity (10) for holding the capsule (5), and further including a plurality of knives (11) located in the cavity (10) concentrically arranged around a central axis (13) of the brew chamber (3) for piercing the capsule (5);
wherein the capsule (5) comprises a capsule body (15, 312) and lid (17) closing an open end of the capsule body (15, 312), the capsule body (15, 312) being frusto conically shaped, wherein the capsule body (15, 312) comprises a bottom (20) opposite the open end, a side wall (21, 316) extending from the bottom (20), and a flange (22, 320) extending outwardly from the side wall (21, 316) near the open end, wherein the lid (17) is attached to the flange (22, 320) and is configured to be opened under fluid pressure for forming the outlet side (25) of the capsule (5), and wherein the bottom (20) of the capsule (5) is configured to be pierced by the knives (11) of the first brew chamber part (7, 306) for forming the inlet side (26) of the capsule (5), and wherein the capsule body (15, 312) and the lid (17) are made from aluminum;
wherein the flange (22, 320) of the capsule (5) is wider than the bottom (20), and wherein the flange (22, 320) is configured to be held between the first and the second brew chamber part (8, 308), the flange (22, 320) being formed such as to provide a seal (30, 200), wherein the seal (30, 200) cooperates with a rim (33) of the first brew chamber part (7, 306) for sealing the brew chamber (3) upon closing thereof; and
wherein the bottom (20) of the capsule (5) comprises a slanted wall portion (35) which is circumferentially arranged around a longitudinal axis (38) of the capsule (5), wherein the slanted wall portion (35) is oriented under an angle (α, 36) with the longitudinal axis (38),
further comprising:
at least one of the first or second brew chamber part (8, 308) relatively moving towards the other one of the first or second brew chamber part (8, 308) for closing of the brew chamber (3);
during said moving of the at least one first or second brew chamber part (8, 308), engaging of at least one of the knives (11) with the slanted wall portion (35); and
wherein upon said engaging of the at least one knife (11),
when longitudinal axis (38) of the capsule (5) is not aligned with the central axis (13) through the brew chamber (3), the at least one knife (11) slips on the surface of the slanted wall portion (35) such as to cause alignment of the longitudinal axis (38) of the capsule (5) with the central axis (13) of the brew chamber (3); and
when longitudinal axis (38) of the capsule (5) is aligned with the central axis (13) through the brew chamber (3), the at least one knife (11) fixes the position of the capsule (5) with respect to the brew chamber (3) and penetrates the surface of the slanted wall portion (35).

## Patentansprüche

1. Baugruppe (1) aus einer Kapsel (5) und einer Brühkammer (3), wobei die Brühkammer (3) zur Verwendung in einer Getränkezubereitungsmaschine konfiguriert ist, wobei die Brühkammer (3) ein erstes Brühkammerteil (7, 306) und ein zweites Brühkammerteil (8, 308) umfasst, die zum Zusammenwirken miteinander zum, bei einem Verschließen des ersten Brühkammerteils (7, 306) mit dem zweiten Brühkammerteil (8, 308), Ausbilden der Brühkammer (3) angeordnet sind,
wobei das erste Brühkammerteil (7, 306) einen Hohlraum (10) zum Halten der Kapsel (5) aufweist und ferner eine Vielzahl von Messern (11), die sich in dem Hohlraum (10) konzentrisch um eine Mittelachse (13) der Brühkammer (3) angeordnet befinden, zum Durchstechen der Kapsel (5) bei dem Verschließen des ersten Brühkammerteils (7, 306) mit dem zweiten Brühkammerteil (8, 308) einschließt;
wobei die Kapsel (5) einen Kapselkörper (15, 312) und einen Deckel (17) umfasst, der ein offenes Ende des Kapselkörpers (15, 312) verschließt, wobei der Kapselkörper (15, 312) kegelstumpfförmig ist, wobei der Kapselkörper (15, 312) einen dem offenen Ende gegenüberliegenden Boden (20), eine sich von dem Boden (20) erstreckende Seitenwand (21, 316) und einen sich von der Seitenwand (21, 316) nahe dem offenen Ende nach außen erstreckenden Flansch (22, 320) umfasst, wobei der Deckel (17) an dem Flansch (22, 320) angebracht ist und konfiguriert ist, um unter Fluiddruck zum Ausbilden der Auslassseite (25) der Kapsel (5) geöffnet zu werden, und wobei die Kapsel (5) optional hermetisch verschlossen ist, wobei der Boden (20) der Kapsel (5) konfiguriert ist, um durch die Messer (11) des ersten Brühkammerteils (7, 306) zum Ausbilden der Einlassseite der Kapsel (5) durchstochen zu werden, und wobei der Kapselkörper (15, 312) und der Deckel (17) aus Aluminium hergestellt sind;
wobei der Flansch (22, 320) der Kapsel (5) breiter als der Boden (20) ist, und wobei der Flansch (22, 320) konfiguriert ist, um zwischen dem ersten und dem zweiten Brühkammerteil (8, 308) gehalten zu werden, wobei der Flansch (22, 320) ausgebildet ist, um eine Dichtung (30, 200) bereitzustellen, wobei die Dichtung (30, 200) zum Abdichten der Brühkammer (3) bei dem Verschließen davon mit einem Rand (33) des ersten Brühkammerteils (7, 306) zusammenwirkt; und
wobei der Boden (20) der Kapsel (5) einen geneigten Wandabschnitt (35) umfasst, der umlaufend um eine Längsachse (38) der Kapsel (5) angeordnet ist, wobei der geneigte Wandabschnitt (35) zum Zusammenwirken mit den Messern (11) derart konfiguriert ist, dass die Messer (11) bei dem Verschließen der Brühkammer (3) mit dem geneigten Wandabschnitt (35) in Eingriff kommen, **dadurch gekennzeichnet, dass** der geneigte Wandabschnitt (35) unter einem Winkel (α, 36) zu der Längsachse (38) zum Zentrieren der Kapsel (5) relativ zu der Mittelachse (13) der Brühkammer (3) vor dem Durchstechen der Kapsel (5) aufgrund eines Gleitens des mindestens einen der Messer (11) bei dem Eingreifen des mindestens einen Messers (11) an dem geneigten Wandabschnitt (35) ausgerichtet ist.

2. Baugruppe (1) nach Anspruch 1, wobei der Boden (20) der Kapsel (5) einen Absatz (80), wobei der Absatz (80) konzentrisch um den geneigten Wandabschnitt (35) angeordnet ist und daran angrenzt, zum Bereitstellen eines Durchstechabsatzes (80) zum Durchstechen der Kapsel (5) nach dem Zentrieren davon umfasst.

3. Baugruppe (1) nach Anspruch 1 oder 2, wobei der Boden (20) der Kapsel (5) einen weiteren Wandabschnitt (93) umfasst, der konzentrisch um den geneigten Wandabschnitt (35) oder den Absatz (80) angeordnet ist, wobei der weitere Wandabschnitt (93) unter einem weiteren Winkel zu der Längsachse (38) ausgerichtet ist.

4. Baugruppe (1) nach einem der vorstehenden Ansprüche, wobei der Winkel (α, 36) des geneigten Wandabschnitts (35) der Kapsel (5) in Bezug auf die Längsachse (38) kleiner als 60 Grad, vorzugsweise kleiner als 55 Grad ist.

5. Baugruppe (1) nach einem der Ansprüche 1 bis 4, wobei bei dem Verschließen des ersten Brühkammerteils (7, 306) mit dem zweiten Brühkammerteil (8, 308) die Dichtung (30, 200) zwischen dem ersten und dem zweiten Brühkammerteil (8, 308) gegen den Rand (33) des ersten Brühkammerteils (7, 306) zum Bereitstellen der Abdichtung der Brühkammer (3) eingeklemmt wird, und wobei die Dichtung (30, 200) aus einem gefalteten Wandabschnitt des Flansches (22, 320) ausgebildet ist.

6. Baugruppe (1) nach Anspruch 5, wobei mindestens eines gilt von:
der Rand (33) ist zum Ermöglichen der Abdichtung der Brühkammer (3) mit dem gefalteten Wandabschnitt entsprechend geformt; oder
der Rand (33) umfasst eine Rippe, die gegen die Dichtung (30, 200) zu klemmen ist.

7. Baugruppe (1) nach Anspruch 5 oder 6, wobei der Rand (33) eine Nut (70) einschließt und wobei der Flansch (22, 320) gefaltet ist, um einen Vorsprung oder einen äußeren Ring (61) auszubilden, der bei dem Verschließen des ersten Brühkammerteils (7, 306) mit dem zweiten Brühkammerteil (8, 308) nach dem Zentrieren der Kapsel (5) in die Nut (70) fällt.

8. Baugruppe (1) nach einem oder mehreren der vorstehenden Ansprüche, wobei der Winkel (α, 36) des geneigten Wandabschnitts (35) in Bezug auf die Längsachse (38) von einer oder mehreren Materialeigenschaften der Kapsel (5) abhängig ist, wobei die Materialeigenschaften mindestens eines einschließen von: einer Materialhärte des Kapselkörpers (15, 312), einer Oberflächenrauheit des geneigten Wandabschnitts (35) und einer Wanddicke des Kapselkörpers (15, 312).

9. Baugruppe (1) nach einem oder mehreren der vorstehenden Ansprüche, wobei, in Kombination mit dem Winkel (α, 36) des geneigten Wandabschnitts (35), eine maximale Haftreibungszahl innerhalb einer Spanne von 0,25 bis 0,40, vorzugsweise zwischen 0,30 und 0,35, erhalten wird durch mindestens eines von:
einer Materialhärte mindestens eines Teils des Kapselkörpers (15, 312);
einer Oberflächenrauheit des geneigten Wandabschnitts (35);
einer Beschichtung auf dem geneigten Wandabschnitt (35) oder auf mindestens einem Teil des Kapselkörpers (15, 312); und
einer Wanddicke des Kapselkörpers (15, 312).

10. Baugruppe (1) nach einem der vorstehenden Ansprüche, wobei die Brühkammer (3) ferner eine Fluidabgabevorrichtung zum Zuführen einer Menge an Fluid, wie Wasser, unter Druck zu dem ersten Brühkammerteil (7, 306) zum Bereitstellen des Fluids an die Kapsel (5) durch die Einlassseite (26) zum Bereitstellen des Fluiddrucks zum Öffnen des Deckels umfasst.

11. Baugruppe (1) nach einem der vorstehenden Ansprüche, wobei die Kapsel (5) ferner einen Durchstechbereich (80) umfasst, der umlaufend um den geneigten Wandabschnitt (35) angeordnet ist, wobei der Durchstechbereich (80) eine Oberfläche aufweist, die im Wesentlichen quer zu der Längsachse (38) ausgerichtet ist.

12. Baugruppe (1) nach Anspruch 11, wobei eine innere Kante (81) des Durchstechbereichs (80) in einem Abstand von etwa 11 bis 13 Millimetern von der Längsachse (38) liegt.

13. Kapsel (5) für die Zubereitung eines Getränks aus einer Getränkezubereitungsmaschine, wobei die Kapsel (5) zur Verwendung in einer Baugruppe (1) nach einem oder mehreren der Ansprüche 1 bis 12 konfiguriert ist, wobei die Kapsel (5) ferner zum Einführen in eine Brühkammer (3) der Getränkezubereitungsmaschine konfiguriert ist, wobei die Brühkammer (3) durch Verschließen eines ersten Brühkammerteils (7, 306) mit einem damit zusammenwirkenden zweiten Brühkammerteil (8, 308) verschließbar ist, wobei das erste Brühkammerteil (7, 306) einen Hohlraum (10) zum Halten der Kapsel (5) aufweist und ferner eine Vielzahl von Messern (11) einschließt, die sich in dem Hohlraum (10) konzentrisch um eine Mittelachse (13) der Brühkammer (3) angeordnet befinden,
wobei die Kapsel (5) einen Kapselkörper (15, 312) und einen Deckel (17) umfasst, der ein offenes Ende des Kapselkörpers (15, 312) verschließt, wobei der Kapselkörper (15, 312) kegelstumpfförmig ist, wobei der Kapselkörper (15, 312) einen dem offenen Ende gegenüberliegenden Boden (20), eine sich von dem Boden (20) erstreckende Seitenwand (21, 316) und einen sich von der Seitenwand (21, 316) nahe dem offenen Ende nach außen erstreckenden Flansch (22, 320) umfasst, wobei der Deckel (17) an dem Flansch (22, 320) angebracht ist und konfiguriert ist, um unter Fluiddruck zum Ausbilden der Auslassseite (25) der Kapsel (5) geöffnet zu werden, und wobei die Kapsel (5) optional hermetisch verschlossen ist, wobei der Boden (20) der Kapsel (5) konfiguriert ist, um durch die Messer (11) der Brühkammer (3) zum Ausbilden der Einlassseite (26) der Kapsel (5) durchstochen zu werden, und wobei der Kapselkörper (15, 312) und der Deckel (17) aus Aluminium hergestellt sind;
wobei der Flansch (22, 320) der Kapsel (5) breiter als der Boden (20) ist, und wobei der Flansch (22, 320) konfiguriert ist, um zwischen dem ersten Brühkammerteil (7, 306) und einem zweiten Brühkammerteil (8, 308) der Brühkammer (3) gehalten zu werden, wobei der Flansch (22, 320) ausgebildet ist, um eine Dichtung (30, 200) bereitzustellen, wobei die Dichtung (30, 200) zum Zusammenwirken mit einem Rand (33) des ersten Brühkammerteils (7, 306) zum Abdichten der Brühkammer (3) bei dem Verschließen davon konfiguriert ist; und
wobei der Boden (20) der Kapsel (5) einen geneigten Wandabschnitt (35) umfasst, der umlaufend um eine Längsachse (38) der Kapsel (5) angeordnet ist, wobei der geneigte Wandabschnitt (35) zum Zusammenwirken mit den Messern (11) derart konfiguriert ist, dass die Messer (11) bei dem Verschließen der Brühkammer (3) mit dem geneigten Wandabschnitt (35) in Eingriff kommen, **dadurch gekennzeichnet, dass** der geneigte Wandabschnitt (35) unter einem Winkel (α, 36) zu der Längsachse (38) zum Zentrieren der Kapsel (5) relativ zu der Mittelachse (13) der Brühkammer (3) vor dem Durchstechen der Kapsel (5) aufgrund eines Gleitens des mindestens einen der Messer (11) bei dem Eingreifen des mindestens einen Messers (11) an dem geneigten Wandabschnitt (35) ausgerichtet ist, wobei in Kombination mit der Abwinklung des geneigten Wandabschnitts (35) eine maximale Haftreibungszahl innerhalb einer Spanne von 0,25 bis 0,40, vorzugsweise zwischen 0,30 und 0,35, erhalten wird durch mindestens eines von:
einer Materialhärte mindestens eines Teils des Kapselkörpers (15, 312);
einer Oberflächenrauheit des geneigten Wandabschnitts (35);
einer Beschichtung auf dem geneigten Wandabschnitt (35) oder auf mindestens einem Teil des Kapselkörpers (15, 312); und
einer Wanddicke des Kapselkörpers (15, 312).

14. Kapsel (5) nach Anspruch 13, wobei der Boden (20) der Kapsel (5) einen Absatz (80), wobei der Absatz (80) konzentrisch um den geneigten Wandabschnitt (35) angeordnet ist und daran angrenzt, zum Bereitstellen eines Durchstechabsatzes (80) zum Durchstechen der Kapsel (5) nach dem Zentrieren davon umfasst.

15. Kapsel (5) nach Anspruch 13 oder 14, wobei der Boden (20) der Kapsel (5) einen weiteren Wandabschnitt (93) umfasst, der konzentrisch um den geneigten Wandabschnitt (35) oder den Absatz (80) angeordnet ist, wobei der weitere Wandabschnitt (93) unter einem weiteren Winkel zu der Längsachse (38) ausgerichtet ist.

16. Kapsel (5) nach Anspruch 15, wobei der Winkel (α, 36) des geneigten Wandabschnitts (35) der Kapsel (5) in Bezug auf die Längsachse (38) kleiner als 60 Grad, vorzugsweise kleiner als 55 Grad, ist.

17. Kapsel (5) nach einem der Ansprüche 13 bis 16, wobei die Dichtung (30, 200) zum Geklemmtwerden gegen den Rand (33) des ersten Brühkammerteils (7, 306) zum Bereitstellen der Abdichtung der Brühkammer (3) konfiguriert ist, und wobei die Dichtung (30, 200) aus einem gefalteten Wandabschnitt des Flansches (22, 320) ausgebildet ist.

18. Kapsel (5) nach Anspruch 17, wobei der Rand (33) mindestens eine von einer Kante oder einer Nut (70) umfasst, die zum Zusammenwirken mit der Dichtung (30, 200) angeordnet ist, um eine Abdichtungskraft auszuüben, und der gefaltete Wandabschnitt zum Ermöglichen der Abdichtung der Brühkammer (3) mit der mindestens einen Kante oder Nut (70) des Randes (33) entsprechend geformt ist.

19. Kapsel (5) nach Anspruch 14 oder 15, wobei der Rand (33) eine Nut (70) einschließt und wobei der Flansch (22, 320) gefaltet ist, um einen äußeren Ring (61) oder einen Vorsprung auszubilden, der bei dem Verschließen des ersten Brühkammerteils (7, 306) mit dem zweiten Brühkammerteil (8, 308) nach dem Zentrieren der Kapsel (5) in eine Nut (70) fällt, die sich an dem Rand (33) befindet.

20. Kapsel (5) nach einem oder mehreren der Ansprüche 13 bis 19, wobei der Winkel (α, 36) des geneigten Wandabschnitts (35) in Bezug auf die Längsachse (38) von einer oder mehreren Materialeigenschaften der Kapsel (5) abhängig ist, wobei die Materialeigenschaften mindestens eines einschließen von: einer Materialhärte des Kapselkörpers (15, 312), einer Oberflächenrauheit des geneigten Wandabschnitts (35) und einer Wanddicke des Kapselkörpers (15, 312).

21. Kapsel (5) nach einem der Ansprüche 13 bis 20, ferner umfassend einen Durchstechbereich (80), der umlaufend um den geneigten Wandabschnitt (35) angeordnet ist, wobei der Durchstechbereich (80) eine Oberfläche aufweist, die im Wesentlichen quer zu der Längsachse (38) ausgerichtet ist.

22. Kapsel (5) nach Anspruch 21, wobei eine innere Kante (81) des Durchstechbereichs (80) in einem Abstand von etwa 11 bis 13 Millimetern von der Längsachse (38) liegt.

23. Verwendung einer Kapsel (5) nach einem oder mehreren der Ansprüche 13 bis 22 in einer Baugruppe (1) nach einem der Ansprüche 1 bis 12, wobei die Brühkammer (3) ein erstes Brühkammerteil (7, 306) und ein zweites Brühkammerteil (8, 308) umfasst, die zum Zusammenwirken miteinander zum Ausbilden der Brühkammer (3) angeordnet sind,
wobei das erste Brühkammerteil (7, 306) einen Hohlraum (10) zum Halten der Kapsel (5) aufweist und ferner eine Vielzahl von Messern (11), die sich in dem Hohlraum (10) konzentrisch um eine Mittelachse (13) der Brühkammer (3) angeordnet befinden, zum Durchstechen der Kapsel (5) einschließt;
wobei die Kapsel (5) einen Kapselkörper (15, 312) und einen Deckel (17) umfasst, der ein offenes Ende des Kapselkörpers (15, 312) verschließt, wobei der Kapselkörper (15, 312) kegelstumpfförmig ist, wobei der Kapselkörper (15, 312) einen dem offenen Ende gegenüberliegenden Boden (20), eine sich von dem Boden (20) erstreckende Seitenwand (21, 316) und einen sich von der Seitenwand (21, 316) nahe dem offenen Ende nach außen erstreckenden Flansch (22, 320) umfasst, wobei der Deckel (17) an dem Flansch (22, 320) angebracht ist und konfiguriert ist, um unter Fluiddruck zum Ausbilden der Auslassseite (25) der Kapsel (5) geöffnet zu werden, und wobei der Boden (20) der Kapsel (5) konfiguriert ist, um durch die Messer (11) des ersten Brühkammerteils (7, 306) zum Ausbilden der Einlassseite (26) der Kapsel (5) durchstochen zu werden, und wobei der Kapselkörper (15, 312) und der Deckel (17) aus Aluminium hergestellt sind;
wobei der Flansch (22, 320) der Kapsel (5) breiter als der Boden (20) ist, und wobei der Flansch (22, 320) konfiguriert ist, um zwischen dem ersten und dem zweiten Brühkammerteil (8, 308) gehalten zu werden, wobei der Flansch (22, 320) ausgebildet ist, um eine Dichtung (30, 200) bereitzustellen, wobei die Dichtung (30, 200) zum Abdichten der Brühkammer (3) bei dem Verschließen davon mit einem Rand (33) des ersten Brühkammerteils (7, 306) zusammenwirkt; und
wobei der Boden (20) der Kapsel (5) einen geneigten Wandabschnitt (35) umfasst, der umlaufend um eine Längsachse (38) der Kapsel (5) angeordnet ist, wobei der geneigte Wandabschnitt (35) unter einem Winkel (α, 36) zu der Längsachse (38) ausgerichtet ist,
ferner umfassend:
mindestens eines des ersten oder des zweiten Brühkammerteils (8, 308) bewegt sich relativ in Richtung des anderen des ersten oder des zweiten Brühkammerteils (8, 308) zum Verschließen der Brühkammer (3);
während des Bewegens des mindestens einen ersten oder zweiten Brühkammerteils (8, 308), Eingreifen mindestens eines der Messer (11) in den geneigten Wandabschnitt (35); und
wobei bei dem Eingreifen des mindestens einen Messers (11),
wenn die Längsachse (38) der Kapsel (5) nicht an der Mittelachse (13) durch die Brühkammer (3) ausgerichtet ist, das mindestens eine Messer (11) auf der Oberfläche des geneigten Wandabschnitts (35) gleitet, um eine Ausrichtung der Längsachse (38) der Kapsel (5) mit der Mittelachse (13) der Brühkammer (3) zu bewirken; und
wenn die Längsachse (38) der Kapsel (5) mit der Mittelachse (13) durch die Brühkammer (3) ausgerichtet ist, das mindestens eine Messer (11) die Position der Kapsel (5) in Bezug auf die Brühkammer (3) fixiert und die Oberfläche des geneigten Wandabschnitts (35) durchdringt.

## Revendications

1. Ensemble (1) composé d'une capsule (5) et d'une chambre d'infusion (3), dans lequel la chambre d'infusion (3) est conçue pour être utilisée dans une machine de préparation de boisson, dans lequel la chambre d'infusion (3) comprend une première partie de chambre d'infusion (7, 306) et une seconde partie de chambre d'infusion (8, 308) agencées pour coopérer l'une avec l'autre afin, lors de la fermeture de la première partie de chambre d'infusion (7, 306) avec la seconde partie de chambre d'infusion (8, 308), de former la chambre d'infusion (3),
la première partie de chambre d'infusion (7, 306) présentant une cavité(10) pour maintenir la capsule (5), et comportant en outre une pluralité de couteaux (11) situés dans la cavité (10) agencés de manière concentrique autour d'un axe central (13) de la chambre d'infusion (3) pour percer la capsule (5) lors de la fermeture de la première partie de chambre d'infusion (7, 306) avec la seconde partie de chambre d'infusion (8, 308) ;
dans lequel la capsule (5) comprend un corps de capsule (15, 312) et un couvercle (17) fermant une extrémité ouverte du corps de capsule (15, 312), le corps de capsule (15, 312) étant de forme tronconique, dans lequel le corps de capsule (15, 312) comprend un fond (20) opposé à l'extrémité ouverte, une paroi latérale (21, 316) s'étendant depuis le fond (20), et un rebord (22, 320) s'étendant vers l'extérieur depuis la paroi latérale (21, 316) près de l'extrémité ouverte, dans lequel le couvercle (17) est attaché au rebord (22, 320) et est conçu pour être ouvert sous la pression d'un fluide pour former le côté de sortie (25) de la capsule (5), et dans lequel, éventuellement, la capsule (5) est fermée de manière hermétique, dans lequel le fond (20) de la capsule (5) est conçu pour être percé par les couteaux (11) de la première partie de chambre d'infusion (7, 306) afin de former le côté d'entrée de la capsule (5), et dans lequel le corps de capsule (15, 312) et le couvercle (17) sont en aluminium ;
dans lequel le rebord (22, 320) de la capsule (5) est plus large que le fond (20), et dans lequel le rebord (22, 320) est conçue pour être maintenu entre la première et la seconde partie de chambre d'infusion (8, 308), le rebord (22, 320) étant formé de manière à fournir un joint (30, 200), dans lequel le joint (30, 200) coopère avec une bordure (33) de la première partie de chambre d'infusion (7, 306) pour assurer l'étanchéité de la chambre d'infusion (3) lors de sa fermeture ; et
dans lequel le fond (20) de la capsule (5) comprend une portion paroi inclinée (35) qui est agencée de manière circonférentielle autour d'un axe longitudinal (38) de la capsule (5), dans lequel la portion paroi inclinée (35) est conçue pour coopérer avec les couteaux (11) de telle sorte que les couteaux (11) viennent en prise avec la portion paroi inclinée (35) lors de la fermeture de la chambre d'infusion (3),**caractérisé en ce que** la portion paroi inclinée (35) est orientée selon un angle (α, 36) par rapport à l'axe longitudinal (38) pour centrer la capsule (5) par rapport à l'axe central (13) de la chambre d'infusion (3) avant le perçage de la capsule (5) en raison du glissement de l'au moins un parmi les couteaux (11) lors de la mise en prise de l'au moins un couteau (11) sur la portion paroi inclinée (35).

2. Ensemble (1) selon la revendication 1, dans lequel le fond (20) de la capsule (5) comprend une saillie (80), dans lequel la saillie (80) est agencée de manière concentrique autour de la portion paroi inclinée (35) et est contiguë à celle-ci, pour fournir une saillie (80) de perçage pour percer la capsule (5) après son centrage.

3. Ensemble (1) selon la revendication 1 ou 2, dans lequel le fond (20) de la capsule (5) comprend une portion paroi supplémentaire (93) agencée de manière concentrique autour de la portion paroi inclinée (35) ou de la saillie (80), la portion paroi supplémentaire (93) étant orientée selon un angle supplémentaire par rapport à l'axe longitudinal (38).

4. Ensemble (1) selon l'une quelconque des revendications précédentes, dans lequel l'angle (α, 36) de la portion paroi inclinée (35) de la capsule (5) par rapport à l'axe longitudinal (38) est inférieur à 60 degrés, de préférence inférieur à 55 degrés.

5. Ensemble (1) selon l'une quelconque des revendications 1 à 4, dans lequel, lors de la fermeture de la première partie de chambre d'infusion (7, 306) avec la seconde partie de chambre d'infusion (8, 308), le joint (30, 200) est enserré entre la première et la seconde partie de chambre d'infusion (8, 308) contre la bordure (33) de la première partie de chambre d'infusion (7, 306) pour assurer l'étanchéité de la chambre d'infusion (3), et dans lequel le joint (30, 200) est formé d'une portion paroi pliée du rebord (22, 320).

6. Ensemble (1) selon la revendication 5, dans lequel au moins l'une parmi :
la bordure (33) est formée de manière correspondante avec la portion paroi pliée pour assurer l'étanchéité de la chambre d'infusion (3) ; ou
la bordure (33) comprend une arête destinée à être serrée contre le joint (30, 200).

7. Ensemble (1) selon la revendication 5 ou 6, dans lequel la bordure (33) comporte une rainure (70) et dans lequel le rebord (22, 320) est plié de manière à former une protubérance ou un anneau externe (61) qui s'ajuste dans la rainure (70) lors de la fermeture de la première partie de chambre d'infusion (7, 306) avec la seconde partie de chambre d'infusion (8, 308) après ledit centrage de la capsule (5).

8. Ensemble (1) selon une ou plusieurs quelconques des revendications précédentes, dans lequel l'angle (α, 36) de la portion paroi inclinée (35) par rapport à l'axe longitudinal (38) dépend d'une ou plusieurs propriétés de matériau de la capsule (5), dans lequel les propriétés de matériau comportent au moins l'une parmi : une dureté de matériau du corps de capsule (15, 312), une rugosité de surface de la portion paroi inclinée (35), et une épaisseur de paroi du corps de capsule (15, 312).

9. Ensemble (1) selon une ou plusieurs quelconques des revendications précédentes, dans lequel, en combinaison avec l'angle (α, 36) de la portion paroi inclinée (35), un coefficient de frottement statique maximal dans une plage de 0,25 à 0,40, de préférence entre 0,30 et 0,35, est obtenu par au moins l'un parmi :
une dureté de matériau d'au moins une partie du corps de capsule (15, 312) ;
une rugosité de surface de la portion paroi inclinée (35) ;
un revêtement sur la portion paroi inclinée (35) ou sur au moins une partie du corps de capsule (15, 312) ; et
une épaisseur de paroi du corps de capsule (15, 312).

10. Ensemble (1) selon l'une quelconque des revendications précédentes, dans lequel la chambre d'infusion (3) comprend en outre un dispositif de distribution de fluide pour alimenter une quantité de fluide, tel que de l'eau, sous pression vers la première partie de chambre d'infusion (7, 306), afin de fournir le fluide à la capsule (5) à travers le côté d'entrée (26) afin de fournir la pression de fluide pour ouvrir le couvercle.

11. Ensemble (1) selon l'une quelconque des revendications précédentes, dans lequel la capsule (5) comprend en outre une zone de perçage (80) agencée de manière circonférentielle autour de la portion paroi inclinée (35), la zone de perçage (80) présentant une surface orientée de manière sensiblement transversale à l'axe longitudinal (38).

12. Ensemble (1) selon la revendication 11, dans lequel un bord interne (81) de la zone de perçage (80) est à une distance d'environ 11 à 13 millimètres de l'axe longitudinal (38).

13. Capsule (5) permettant la préparation d'une boisson à partir d'une machine de préparation de boisson, la capsule (5) étant conçue pour être utilisée dans un ensemble (1) selon une ou plusieurs quelconques des revendications 1 à 12, la capsule (5) étant en outre conçue pour être insérée dans une chambre d'infusion (3) de la machine de préparation de boisson, dans laquelle la chambre d'infusion (3) peut être fermée par la fermeture d'une première partie de chambre d'infusion (7, 306) avec une seconde partie de chambre d'infusion (8, 308) coopérant avec celle-ci, la première partie de chambre d'infusion (7, 306) présentant une cavité (10) pour maintenir la capsule (5), et comportant en outre une pluralité de couteaux (11) situés dans la cavité (10) agencés de manière concentrique autour d'un axe central (13) de la chambre d'infusion (3),
dans laquelle la capsule (5) comprend un corps de capsule (15, 312) et un couvercle (17) fermant une extrémité ouverte du corps de capsule (15, 312), le corps de capsule (15, 312) étant de forme tronconique, dans laquelle le corps de capsule (15, 312) comprend un fond (20) opposé à l'extrémité ouverte, une paroi latérale (21, 316) s'étendant depuis le fond (20), et un rebord (22, 320) s'étendant vers l'extérieur depuis la paroi latérale (21, 316) près de l'extrémité ouverte, dans lequel le couvercle (17) est attaché au rebord (22, 320) et est conçu pour être ouvert sous la pression d'un fluide pour former le côté de sortie (25) de la capsule (5), et dans lequel, éventuellement, la capsule (5) est fermée de manière hermétique, dans laquelle le fond (20) de la capsule (5) est conçu pour être percé par les couteaux (11) de la chambre d'infusion (3) pour former le côté d'entrée (26) de la capsule (5), et dans laquelle le corps de capsule (15, 312) et le couvercle (17) sont en aluminium ;
dans laquelle le rebord (22, 320) de la capsule (5) est plus large que le fond (20), et dans laquelle le rebord (22, 320) est conçu pour être maintenu entre la première partie de chambre d'infusion (7, 306) et une seconde partie de chambre d'infusion (8, 308) de la chambre d'infusion (3), le rebord (22, 320) étant formé de manière à fournir un joint (30, 200), dans laquelle le joint (30, 200) est conçu pour coopérer avec une bordure (33) de la première partie de chambre d'infusion (7, 306) pour assurer l'étanchéité de la chambre d'infusion (3) lors de sa fermeture ; et
dans lequel le fond (20) de la capsule (5) comprend une portion paroi inclinée (35) qui est agencée de manière circonférentielle autour d'un axe longitudinal (38) de la capsule (5), dans lequel la portion paroi inclinée (35) est conçue pour coopérer avec les couteaux (11) de telle sorte que les couteaux (11) viennent en prise avec la portion paroi inclinée (35) lors de la fermeture de la chambre d'infusion (3), **caractérisée en ce que** la portion paroi inclinée (35) est orientée selon un angle (α, 36) par rapport à l'axe longitudinal (38), pour centrer la capsule (5) par rapport à l'axe central (13) de la chambre d'infusion (3) avant le perçage de la capsule (5) en raison du glissement de l'au moins un parmi les couteaux (11) lors de la mise en prise de l'au moins un couteau (11) sur la portion paroi inclinée (35), dans laquelle, en combinaison avec l'inclinaison de la portion paroi inclinée (35), un coefficient de frottement statique maximal dans une plage de 0,25 à 0,40, de préférence entre 0,30 et 0,35, est obtenu par au moins l'un parmi :
une dureté de matériau d'au moins une partie du corps de capsule (15, 312) ;
une rugosité de surface de la portion paroi inclinée (35) ;
un revêtement sur la portion paroi inclinée (35) ou sur au moins une partie du corps de capsule (15, 312) ; et
une épaisseur de paroi du corps de capsule (15, 312).

14. Capsule (5) selon la revendication 13, dans laquelle le fond (20) de la capsule (5) comprend une saillie (80), dans laquelle la saillie (80) est agencée de manière concentrique autour de la portion paroi inclinée (35) et est contiguë à celle-ci, pour fournir une saillie (80) de perçage pour percer la capsule (5) après son centrage.

15. Capsule (5) selon la revendication 13 ou 14, dans laquelle le fond (20) de la capsule (5) comprend une portion paroi supplémentaire (93) agencée de manière concentrique autour de la portion paroi inclinée (35) ou de la saillie (80), la portion paroi supplémentaire (93) étant orientée selon un angle supplémentaire par rapport à l'axe longitudinal (38).

16. Capsule (5) selon la revendication 15, dans laquelle l'angle (α, 36) de la portion paroi inclinée (35) de la capsule (5) par rapport à l'axe longitudinal (38) est inférieur à 60 degrés, de préférence inférieur à 55 degrés.

17. Capsule (5) selon l'une quelconque des revendications 13 à 16, dans laquelle le joint (30, 200) est conçu pour être serré contre la bordure (33) de la première partie de chambre d'infusion (7, 306) pour assurer l'étanchéité de la chambre d'infusion (3), et dans laquelle le joint (30, 200) est formé d'une portion paroi pliée du rebord (22, 320).

18. Capsule (5) selon la revendication 17, dans laquelle la bordure (33) comprend au moins l'un parmi un bord ou une rainure (70) agencé pour coopérer avec le joint (30, 200) de manière à exercer une force d'étanchéité, et la portion paroi pliée est formée de manière correspondante avec l'au moins un bord ou rainure (70) de la bordure (33) pour assurer l'étanchéité de la chambre d'infusion (3).

19. Capsule (5) selon la revendication 14 ou 15, dans laquelle la bordure (33) comporte une rainure (70) et dans laquelle le rebord (22, 320) est plié de manière à former un anneau externe (61) ou une protubérance qui s'ajuste dans une rainure (70) située sur la bordure (33) lors de la fermeture de la première partie de chambre d'infusion (7, 306) avec la seconde partie de chambre d'infusion (8, 308) après ledit centrage de la capsule (5).

20. Capsule (5) selon une ou plusieurs quelconques des revendications 13 à 19, dans laquelle l'angle (α, 36) de la portion paroi inclinée (35) par rapport à l'axe longitudinal (38) dépend d'une ou plusieurs propriétés de matériau de la capsule (5), dans laquelle les propriétés de matériau comportent au moins l'une parmi : une dureté de matériau du corps de capsule (15, 312), une rugosité de surface de la portion paroi inclinée (35), et une épaisseur de paroi du corps de capsule (15, 312).

21. Capsule (5) selon l'une quelconque des revendications 13 à 20, comprenant en outre une zone de perçage (80) agencée de manière circonférentielle autour de la portion paroi inclinée (35), la zone de perçage (80) présentant une surface orientée de manière sensiblement transversale à l'axe longitudinal (38).

22. Capsule (5) selon la revendication 21, dans laquelle un bord interne (81) de la zone de perçage (80) est à une distance d'environ 11 à 13 millimètres de l'axe longitudinal (38).

23. Utilisation d'une capsule (5) selon une ou plusieurs quelconques des revendications 13 à 22 dans un ensemble (1) selon l'une quelconque des revendications 1 à 12, dans laquelle la chambre d'infusion (3) comprend une première partie de chambre d'infusion (7, 306) et une seconde partie de chambre d'infusion (8, 308) agencées pour coopérer entre elles afin de former la chambre d'infusion (3),
la première partie de chambre d'infusion (7, 306) présentant une cavité (10) pour maintenir la capsule (5), et comportant en outre une pluralité de couteaux (11) situés dans la cavité (10) agencés de manière concentrique autour d'un axe central (13) de la chambre d'infusion (3) pour percer la capsule (5) ;
dans laquelle la capsule (5) comprend un corps de capsule (15, 312) et un couvercle (17) fermant une extrémité ouverte du corps de capsule (15, 312), le corps de capsule (15, 312) étant de forme tronconique, dans laquelle le corps de capsule (15, 312) comprend un fond (20) opposé à l'extrémité ouverte, une paroi latérale (21, 316) s'étendant depuis le fond (20), et un rebord (22, 320) s'étendant vers l'extérieur depuis la paroi latérale (21, 316) près de l'extrémité ouverte, dans laquelle le couvercle (17) est attaché au rebord (22, 320) et est conçu pour être ouvert sous la pression d'un fluide pour former le côté de sortie (25) de la capsule (5), et dans laquelle le fond (20) de la capsule (5) est conçu pour être percé par les couteaux (11) de la première partie de chambre d'infusion (7, 306) pour former le côté d'entrée (26) de la capsule (5), et dans laquelle le corps de capsule (15, 312) et le couvercle (17) sont en aluminium ;
dans lequel le rebord (22, 320) de la capsule (5) est plus large que le fond (20), et dans lequel le rebord (22, 320) est conçue pour être maintenu entre la première et la seconde partie de chambre d'infusion (8, 308), le rebord (22, 320) étant formé de manière à fournir un joint (30, 200), dans lequel le joint (30, 200) coopère avec une bordure (33) de la première partie de chambre d'infusion (7, 306) pour assurer l'étanchéité de la chambre d'infusion (3) lors de sa fermeture ; et
dans laquelle le fond (20) de la capsule (5) comprend une portion paroi inclinée (35) qui est agencée de manière circonférentielle autour d'un axe longitudinal (38) de la capsule (5), dans laquelle la portion paroi inclinée (35) est orientée selon un angle (α, 36) par rapport à l'axe longitudinal (38),
comprenant en outre :
au moins l'une parmi la première ou la seconde partie de chambre d'infusion (8, 308) se déplaçant de manière relative vers l'autre parmi la première ou la seconde partie de chambre d'infusion (8, 308) pour la fermeture de la chambre d'infusion (3) ;
pendant ledit déplacement de l'au moins une première ou seconde partie de chambre d'infusion (8, 308), la mise en prise d'au moins l'un parmi les couteaux (11) avec la portion paroi inclinée (35) ; et
dans laquelle, lors de ladite mise en prise de l'au moins un couteau (11),
lorsqu'un axe longitudinal (38) de la capsule (5) n'est pas aligné sur l'axe central (13) à travers la chambre d'infusion (3), l'au moins un couteau (11) glisse sur la surface de la portion paroi inclinée (35) de manière à amener un alignement de l'axe longitudinal (38) de la capsule (5) sur l'axe central (13) de la chambre d'infusion (3) ; et
lorsqu'un axe longitudinal (38) de la capsule (5) est aligné sur l'axe central (13) à travers la chambre d'infusion (3), l'au moins un couteau (11) fixe la position de la capsule (5) par rapport à la chambre d'infusion (3) et pénètre dans la surface de la portion paroi inclinée (35).
